# EUROPEAN PATENT APPLICATION

(11) **EP 4 693 138 A1**
(43) Date of publication of application: **11.02.2026**
(21) Application number: 24784706.4
(22) Date of filing: 18.03.2024
(51) Int. Cl.: G06Q 10/30, B09B 5/00, G06T 7/00, G06V 10/82

(54) **DECOMPOSITION INFORMATION GENERATING METHOD**

(30) Priority: 03.04.2023 JP 2023060275
(71) Applicant: Panasonic Intellectual Property Management Co., Ltd., Kadoma-shi, Osaka 571-0057 (JP)
(72) Inventor: MIYAJI, Naoya, Kadoma-shi, Osaka 571-0057 (JP)
(74) Representative: Novagraaf International SA
(86) International application number: PCT/JP2024/010414
(87) International publication number: WO 2024/209912

(57) **Abstract**

To specify a plurality of decomposition target places from a target object captured image based on first deep learning model (22a) having learned two classifications of images of decomposition target place (10a) and decomposition non-target place (10b) of target object (10); update the plurality of specified decomposition target places by deleting, as the decomposition non-target place, at least one of the plurality of specified decomposition target places by using a first deletion step or a second deletion step, the first deletion step being a step of deleting, as the decomposition non-target place, at least one of the plurality of specified decomposition target places based on a second deep learning model (22b) that has learned two classifications of images and has a lower detection rate of the decomposition target place than the first deep learning model, the second deletion step being a step of deleting, as the decomposition non-target place, at least one of the specified decomposition target places based on decomposition availability information based on the plurality of specified decomposition target places; and generate decomposition information.

## Description

### TECHNICAL FIELD

The present disclosure relates to a decomposition information generating method for generating decomposition information used for automatic decomposition of a decomposition target object such as a product.

### BACKGROUND ART

Due to economic activities of mass consumption and mass disposal, global environmental problems such as global warming and resource depletion have arisen.

Under such circumstances, the home appliance recycling law has been enforced in Japan since April 2001 in order to construct a resource circulation type society. The home appliance recycling law requires recycling of used home electric appliances (air conditioner, television, refrigerator, freezer chamber, washing machine, clothing drying machine, and the like). As a result, used home electric appliances are manually disassembled in a home electric appliance recycling factory and collected for each material. Alternatively, after crushed into small pieces by a crusher, the small pieces are sorted and recovered for each material type using magnetism, wind power, vibration, or the like, and are recycled as a recycled material.

At present, for recycling, manual disassembly is generally performed, but due to an increase in labor cost or a shortage of labor, research and development of an automatic decomposition device using automatic recognition by a robot camera is performed. However, in the disassembly of used products in the home appliance recycling, since there is a case where a decomposition target place cannot be partially specified due to rust, deterioration, or deformation, if design information can be prepared in advance, the decomposition target place can be easily specified. Under such circumstances, there has been proposed an information processing technology for causing a product itself to store disassembling information, reading the disassembling information in a disassembling factory, and automatically disassembling the product as in Patent Literature 1.

Fig. 14 is a diagram illustrating a conventional information processing device described in PTL 1.

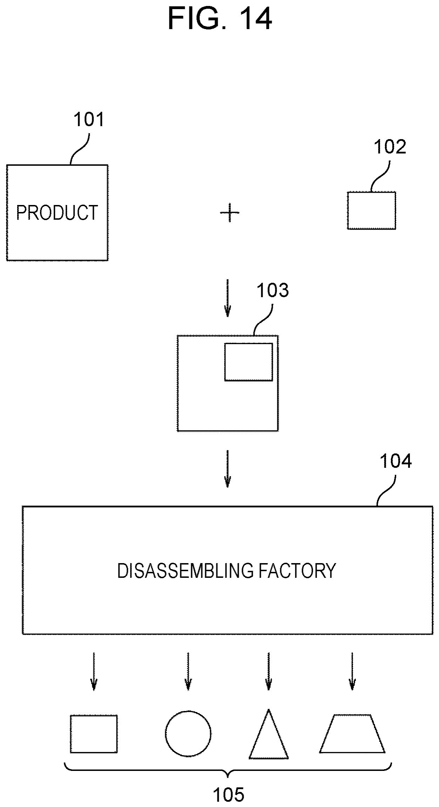

In Fig. 14, product 103 having the disassembling information is prepared, the product including storage device 102 storing the disassembling information in product 101. Next, in dismantling factory 104, the information processing device controls an information reading operation by the reader that reads the disassembling information from product 103 having the disassembling information. Next, a disassembling program included in the disassembling information of storage device 102 is transmitted to a disassembling robot. Next, the operation of the disassembling robot is controlled according to the disassembling program, and product 101 is disassembled into various materials 105.

### Citation List

### Patent Literature

PTL 1: Unexamined Japanese Patent Publication No. 2002-346537

### SUMMARY OF THE INVENTION

A decomposition information generating method according to one aspect of the present disclosure includes:
Specifying, based on a first deep learning model, a plurality of decomposition target places from a captured image obtained by imaging a target object, the first deep learning model being among two deep learning models having learned images of a decomposition target place and a decomposition non-target place of the target object;
updating the plurality of specified decomposition target places by deleting, as the decomposition non-target place, at least one of the plurality of specified decomposition target places by using at least one deletion step among a first deletion step and a second deletion step, the first deletion step being a step of deleting, as the decomposition non-target place, at least one of the plurality of specified decomposition target places based on a second deep learning model having a lower detection rate of the decomposition target place than the first deep learning model among the two deep learning models, and the second deletion step being a step of deleting, as the decomposition non-target place, at least one of the plurality of specified decomposition target places based on decomposition availability information acquired by an automatic decomposition device performing a decomposition operation based on the plurality of specified decomposition target places; and
generating decomposition information based on the plurality of updated decomposition target places.

### BRIEF DESCRIPTION OF THE DRAWINGS

Fig. 1 is a configuration block diagram of an automatic decomposition device capable of implementing a decomposition information generating method according to a first exemplary embodiment of the present disclosure.
Fig. 2 is a schematic view of the automatic decomposition device according to the first exemplary embodiment of the present disclosure.
Fig. 3 is a flowchart of an automatic decomposition operation by the automatic decomposition device according to the first exemplary embodiment of the present disclosure.
Fig. 4 is a configuration block diagram of an automatic decomposition device including a decomposition information accumulation unit according to the first exemplary embodiment of the present disclosure.
Fig. 5 is a flowchart of a decomposition information generating method according to the first exemplary embodiment of the present disclosure.
Fig. 6 is a flowchart of automatic decomposition using decomposition information according to the first exemplary embodiment of the present disclosure.
Fig. 7 is a flowchart of the decomposition information generating method according to the first exemplary embodiment of the present disclosure.
Fig. 8 is a configuration block diagram of a calculation unit of the automatic decomposition device according to the first exemplary embodiment of the present disclosure.
Fig. 9 is a flowchart of the decomposition information generating method according to the first exemplary embodiment of the present disclosure.
Fig. 10 is a flowchart of the decomposition information generating method according to the first exemplary embodiment of the present disclosure.
Fig. 11 is a flowchart of the decomposition information generating method according to the first exemplary embodiment of the present disclosure.
Fig. 12 is a configuration block diagram of a calculation unit of an automatic decomposition device according to a second exemplary embodiment of the present disclosure.
Fig. 13 is a flowchart of a decomposition information generating method according to the second exemplary embodiment of the present disclosure.
Fig. 14 is a diagram illustrating a conventional disassembling information processing device described in PTL 1.

### DESCRIPTION OF EMBODIMENTS

In the conventional technique, a manufacturer who makes a product needs to give decomposition information to the product in advance. However, when products of various manufacturers such as home appliance recycling are mixed, it is difficult because it is necessary to formulate and provide decomposition information in a format unified among manufacturers in advance.

The present disclosure solves the above-described conventional problems, and an object of the present disclosure is to provide a decomposition information generating method capable of generating highly accurate decomposition information on the basis of a recognition result or a decomposition result using deep learning without requiring a manufacturer who makes a product to give decomposition information to the product in advance.

### Solution to Problem

Hereinafter, exemplary embodiments of the present disclosure will be described with reference to the drawings.

### (First exemplary embodiment)

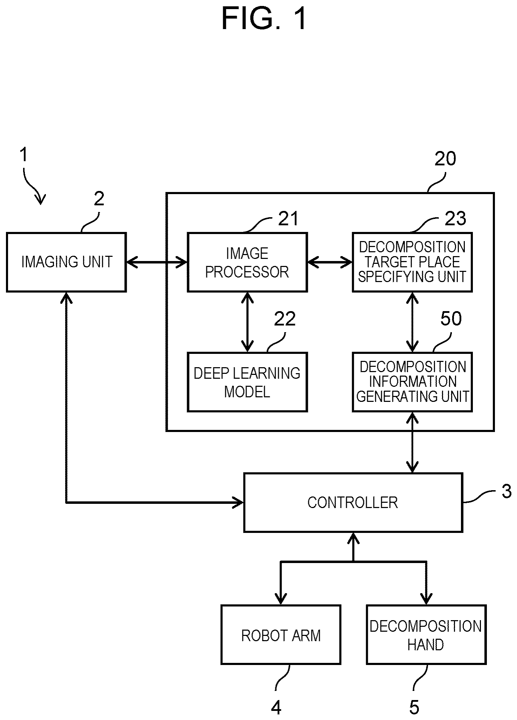

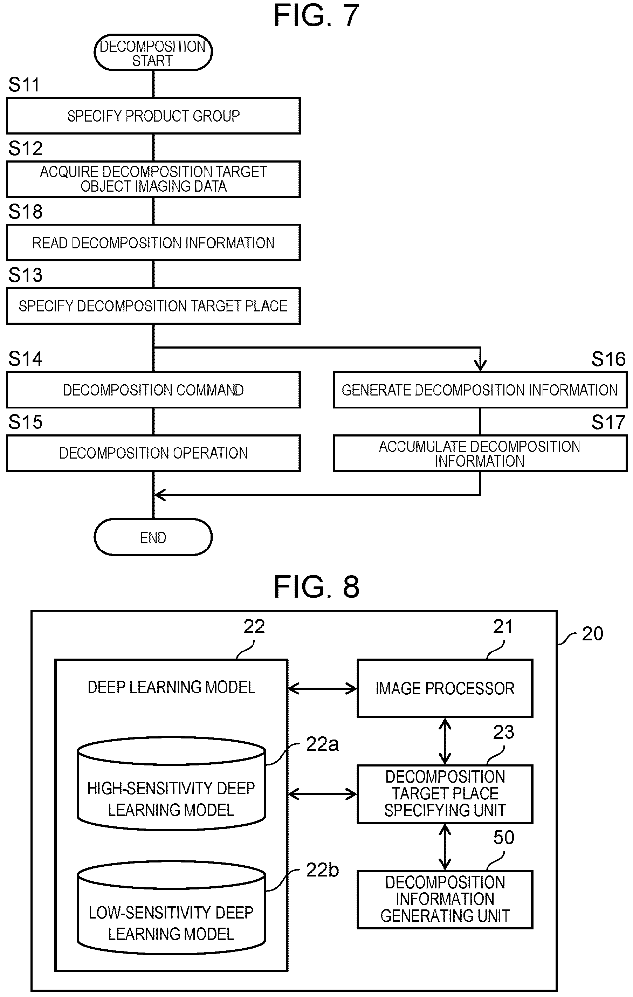

In the following description, a basic configuration and operation of automatic decomposition device 1 capable of implementing the decomposition information generating method according to the first exemplary embodiment of the present disclosure will be described with reference to Figs. 1 to 7. In Figs. 8 to 11, features of the decomposition information generating method of the first exemplary embodiment will be described in detail.

First, Fig. 1 is a block diagram illustrating a basic configuration of automatic decomposition device 1 capable of implementing the decomposition information generating method according to the first exemplary embodiment of the present disclosure.

As shown in Fig. 1, automatic decomposition device 1 includes imaging unit 2, calculation unit 20, controller 3, robot arm 4, and decomposition hand 5.

Imaging unit 2 is, for example, a camera that images decomposition target object 10 based on a command from controller 3. Examples of decomposition target object 10 include home electric appliances such as an air conditioner, a refrigerator, a television, and a washing machine.

Calculation unit 20 includes image processor 21, deep learning model 22, decomposition target place specifying unit 23, and decomposition information generating unit 50.

Image processor 21 performs image processing of imaging data of a captured image imaged by imaging unit 2.

Deep learning model 22 is generated by learning two classifications of images of a decomposition target place and a decomposition non-target place. Image processor 21 extracts a decomposition target place from the imaging data using deep learning model 22.

Here, the decomposition target place indicates coordinates of a position of a portion whose constraint is to be released in order to decompose decomposition target object 10 of a product or the like such as a position coordinate of, for example, a screw hole of a decomposition target member which is a fastening component such as a screw for fixing between components constituting a used product which is decomposition target object 10, a position coordinate of a portion to be sucked or gripped in order to remove a component whose fixing has been released, or a position coordinate of a component to be cut.

Decomposition target place specifying unit 23 specifies the decomposition target place based on the extracted decomposition target place. As will be described in detail later, decomposition target place specifying unit 23 performs selection by a deletion step or the like from among the decomposition target places extracted by image processing, and finally specifies the decomposition target place.

Decomposition information generating unit 50 generates decomposition information based on the specified decomposition target place.

The decomposition information includes at least identification information of decomposition target object 10, information of a position of a decomposition target place, and information of a decomposition target member of each decomposition target place, and these pieces of information are associated with a product model number (in other words, a product group to be described later).

Controller 3 integrally controls imaging unit 2, robot arm 4, and decomposition hand 5, and controls operations of robot arm 4 and decomposition hand 5 based on the decomposition information generated by decomposition information generating unit 50 of calculation unit 20.

Robot arm 4 has decomposition hand 5 at a distal end, and uses a tool attached to decomposition hand 5 to perform an operation of releasing a constraint for disassembling a target object such as a product, such as a fastening release operation of a decomposition target member, which is a fastening component such as a screw, for fixing between components constituting a used product which is decomposition target object 10, a suction or gripping operation for removing the component whose fixing has been released, or a cutting operation of the component.

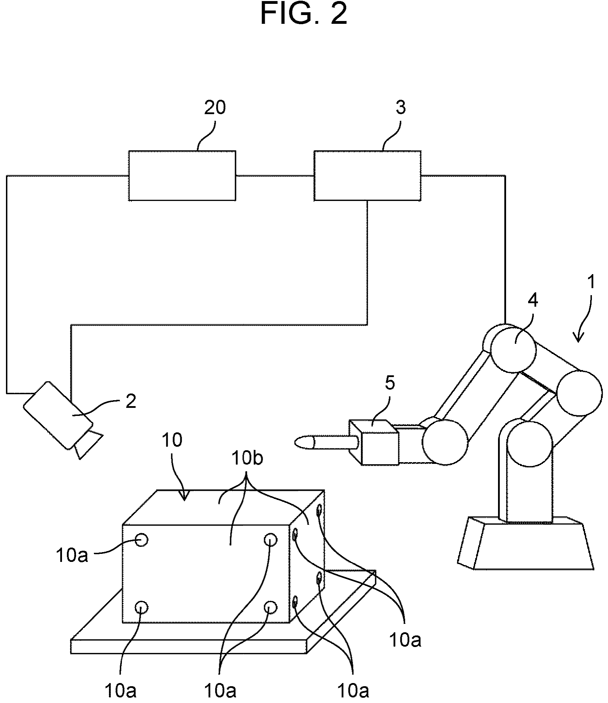

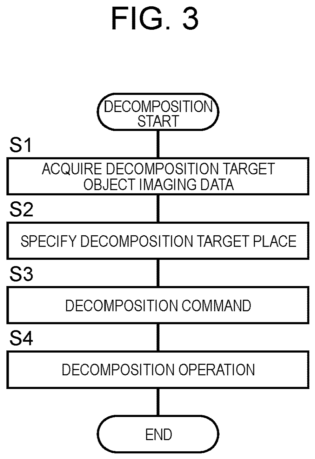

The basic decomposition operation of automatic decomposition device 1 according to the first exemplary embodiment will be described with reference to the schematic diagram of Fig. 2 and the flowchart of Fig. 3. Herein, Fig. 3 is referred to as a step of the decomposition operation, and Fig. 2 is referred to as other symbols.

In step S1, imaging unit 2 images decomposition target object 10 based on a command from controller 3 to acquire imaging data.

Next, in step S2, calculation unit 20 specifies a decomposition target part by image processing on the basis of the acquired imaged data. Here, in calculation unit 20, image processor 21 extracts the decomposition target place from the imaging data using deep learning model 22, and decomposition target place specifying unit 23 specifies the decomposition target place. Deep learning model 22 is generated by learning in advance two classifications of images of a decomposition target place (for example, 10a in Fig. 2) and a decomposition non-target place (for example, 10b in Fig. 2). Decomposition information generating unit 50 generates decomposition information based on the specified decomposition target place.

Here, the decomposition non-target place means a place other than the decomposition target place and not a target of the decomposition operation.

Next, in step S3, controller 3 sends a command of the decomposition operation to robot arm 4 and decomposition hand 5 based on the generated decomposition information.

Next, in step S4, robot arm 4 and decomposition hand 5 decompose the decomposition target place of decomposition target object 10.

Although the above is the basic decomposition operation of automatic decomposition device 1, in the first exemplary embodiment, the decomposition information is generated and accumulated by utilizing the operation of the automatic decomposition, and the decomposition accuracy of the automatic decomposition is improved by using the generated and accumulated decomposition information. The method is described below.

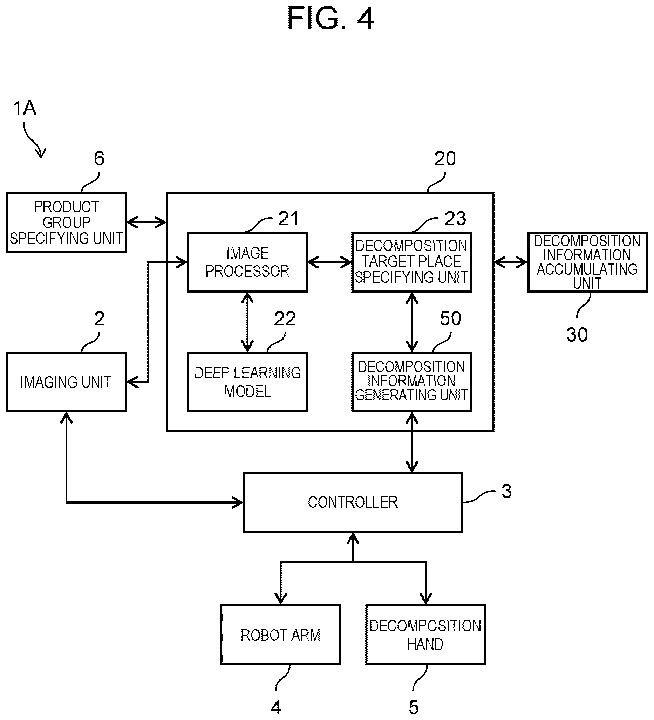

Fig. 4 is a block diagram illustrating a configuration of automatic decomposition device 1A that generates and uses decomposition information in the decomposition information generating method according to the first exemplary embodiment. In Fig. 4, the same components as those in Fig. 1 are denoted by the same reference numerals, and description thereof is omitted.

In Fig. 4, automatic decomposition device 1A includes product group specifying unit 6 that specifies a product group having the same product structure among a large number of decomposition target objects, decomposition information generating unit 50 that generates decomposition information, and decomposition information accumulating unit 30 that stores information on a decomposition target place associated with the product group.

Product group specifying unit 6 includes, for example, a camera and an image processor that performs image processing on imaging data by the camera, and reads a product model number of a product label attached to a product of decomposition target object 10 or reads the product model number from the shape of the appearance of the product to specify a product group having the same product structure among a large number of decomposition target objects. Here, the product group means products having the same product model number and the same product structure.

Decomposition information accumulating unit 30 stores decomposition information including a decomposition target place associated with a product group.

Automatic decomposition device 1A generates decomposition information using an image processing result of automatic decomposition as follows. Automatic decomposition device 1A performs automatic decomposition based on data obtained by performing image processing on a captured image using deep learning model 22 without using the decomposition information until the decomposition information is generated. After the decomposition information is generated, automatic decomposition device 1A performs automatic decomposition by also using the decomposition information.

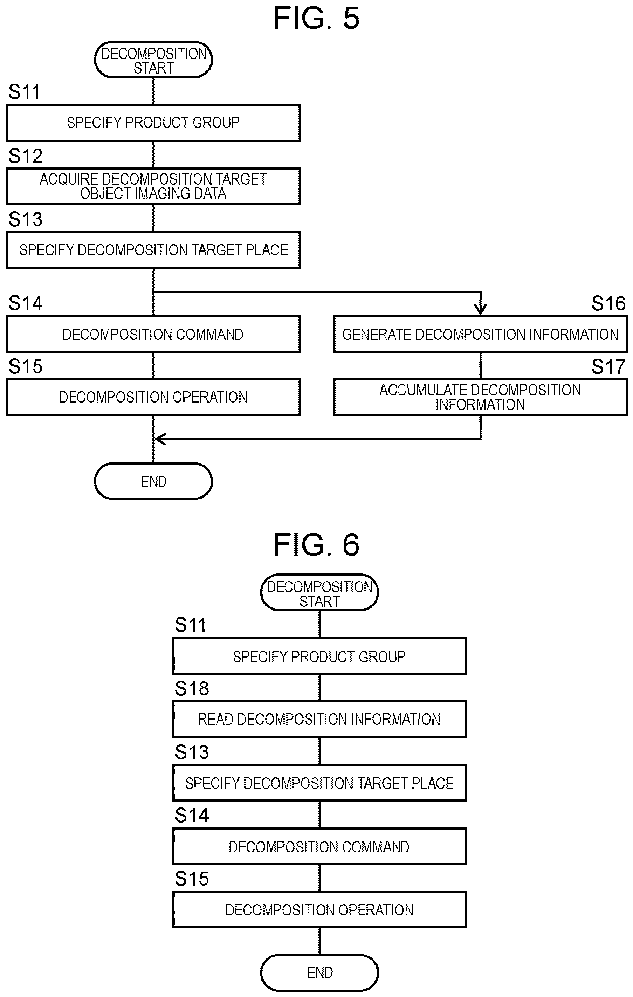

A decomposition information generating method according to the first exemplary embodiment will be described with reference to a flowchart in Fig. 5.

In step S11, product group specifying unit 6 specifies the product group of decomposition target object 10. Here, the specifying method may be any method such as reading the product model number of the product label attached to the product of decomposition target object 10 or reading the product model number from the shape of the appearance of the product.

Next, in step S12, imaging unit 2 images decomposition target object 10 based on a command from controller 3.

Next, in step S13, in calculation unit 20, image processor 21 performs image processing on the imaging data, decomposition target place specifying unit 23 specifies the decomposition target place, and decomposition information generating unit 50 generates the decomposition information.

Next, in step S14, controller 3 sends a decomposition operation command to robot arm 4 and decomposition hand 5 based on the decomposition information.

Next, in step S15, robot arm 4 and decomposition hand 5 decompose the decomposition target place of decomposition target object 10.

Further, after step S13, in parallel with step S14, in step S16, in order to accumulate the decomposition information including the information on the decomposition target place specified in step S13, decomposition information generating unit 50 generates the accumulated information in a predetermined data format.

Next, in step S17, decomposition information accumulating unit 30 accumulates the decomposition information from decomposition information generating unit 50 as the accumulated information. The predetermined data format is not limited as long as automatic decomposition device 1A can operate.

Automatic decomposition device 1A performs the automatic decomposition using the decomposition information of decomposition information accumulating unit 30 on the product group in which the decomposition information is generated and accumulated as described above based on the flowchart of Fig. 6. The flowchart of Fig. 6 is different from the flowchart of Fig. 5 in that decomposition information generating unit 50 reads the decomposition information from decomposition information accumulating unit 30 in step S18 instead of acquiring the decomposition target object imaging data in step S12 in Fig. 5, and the decomposition target place is specified in step S13. With such a configuration, even in a product in which it is difficult to specify a decomposition place by image recognition, automatic decomposition can be performed with high accuracy. In addition, since the decomposition information has already been accumulated, the flowchart of Fig. 6 is different from the flowchart of Fig. 5 also in that the decomposition information generation in step S16 and the decomposition information accumulation in step S17 are not performed.

However, as in the flowchart of Fig. 7, both the decomposition target object imaging data acquisition in step S12 and the decomposition information reading in step S18 may be performed. With this configuration, it is possible to avoid that the decomposition information is not accumulated again when at least one piece of decomposition information is accumulated. When step S12 and step S18 are inconsistent at the same decomposition target place, any of them may be adopted as an example. As another example, as will be described later, when the plurality of stored decomposition information candidate files are integrated to generate the decomposition information, the decomposition information in which the degree of completeness of the decomposition information is increased by the integration may be adopted. Alternatively, for example, if there is a screw but there is no decomposition target place, a problem occurs, and thus a side where there is a decomposition target place may be adopted.

When both step S12 and step S18 are performed, the order of step S12 and step S18 is not limited. In addition, similarly to Fig. 7, the decomposition information generation in step S16 and the decomposition information accumulation in step S17 may be performed.

Here, in the case of generating the decomposition information, although the decomposition information is generated based on data obtained by imaging decomposition target object 10, since decomposition target object 10 is a used product, there is a variation in the appearance state, and thus it may be difficult to specify the decomposition target place. Although the specification using deep learning model 22 is assumed for the specification of the decomposition target place in step S13 such as Fig. 5, there is a case where the decomposition target place cannot be correctly specified by one-time processing. Therefore, in the first exemplary embodiment, as illustrated in Fig. 8, deep learning model 22 in calculation unit 20 includes two types of models, high-sensitivity deep learning model 22a and low-sensitivity deep learning model 22b.

High-sensitivity deep learning model 22a is a model that extracts many decomposition target places but is likely to erroneously determine a decomposition non-target place as a decomposition target place among deep learning models having learned two classifications of images of the decomposition target place and the decomposition non-target place. Low-sensitivity deep learning model 22b is a model that has a lower detection rate of the decomposition target place than high-sensitivity deep learning model 22a, in other words, is less likely to erroneously determine the decomposition non-target place as the decomposition target place, but is likely to extract fewer decomposition target places than high-sensitivity deep learning model 22a among the deep learning models that have learned two classifications of images of the decomposition target place and the decomposition non-target place. Regarding the extraction accuracy of the decomposition target place and the easiness of erroneous determination of the decomposition non-target place of two deep learning models 22a and 22b, a difference between the two models is indicated, and the magnitude of the difference does not matter.

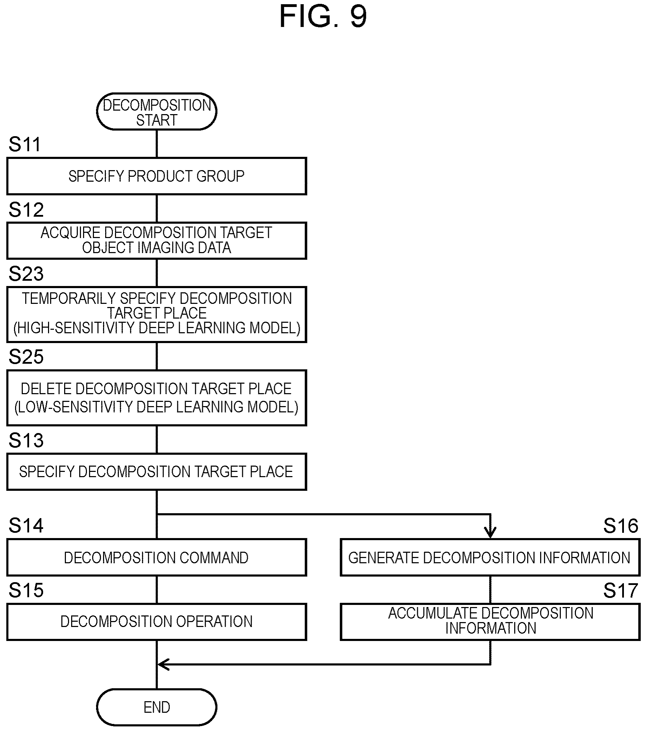

The decomposition information generating method using above two deep learning models 22a and 22b will be described with reference to the flowchart of Fig. 9.

In Fig. 9, the same steps as those in Fig. 7 are denoted by the same reference numerals, and description thereof is omitted. In the following description, a block diagram of automatic decomposition device 1A of Fig. 4 is also used.

After the specification of the product group in step S11, in step S12, imaging unit 2 images decomposition target object 10 based on a command from controller 3 to acquire imaging data.

Next, in step S23, calculation unit 20 performs temporal specification by decomposition target place specifying unit 23 using high-sensitivity deep learning model 22a. Specifically, image processor 21 performs image processing using high-sensitivity deep learning model 22a based on the acquired imaging data to extract a decomposition target place. Decomposition target place specifying unit 23 temporarily specifies the decomposition target place.

Next, calculation unit 20 deletes the decomposition target place. Specifically, only the periphery of the place temporarily specified in step S23 is input, and image processor 21 performs image processing using low-sensitivity deep learning model 22b to extract the decomposition target place in step S25. Decomposition target place specifying unit 23 specifies a decomposition target place. Decomposition target place specifying unit 23 compares the decomposition target place specified by low-sensitivity deep learning model 22b with the temporarily specified decomposition target place. Decomposition target place specifying unit 23 deletes, as the first deletion step, a place that is erroneously specified by high-sensitivity deep learning model 22a and is specified by low-sensitivity deep learning model 22b as a decomposition non-target place other than the decomposition target place.

Thereafter, the process proceeds to step S13, and in step S13, decomposition target place specifying unit 23 updates and formally specifies the decomposition target place. The subsequent steps are the same as those in Fig. 7.

As a result, after high-sensitivity deep learning model 22a specifies the decomposition target places without leaking and narrows the search range, the places that are the decomposition target places erroneously specified by high-sensitivity deep learning model 22a and are specified as the decomposition non-target places other than the decomposition target places by low-sensitivity deep learning model 22b can be deleted as the first deletion step. As a result, decomposition information generating unit 50 can generate more accurate decomposition information.

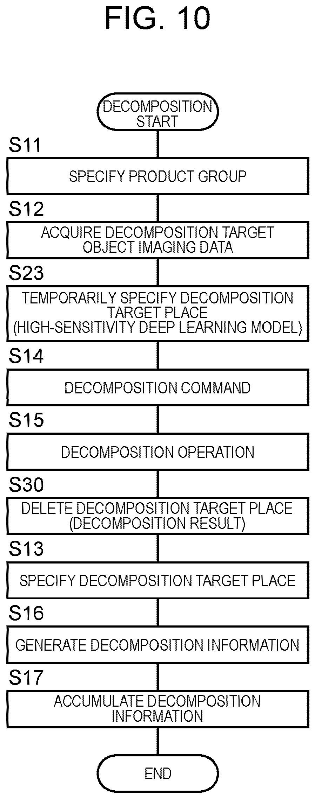

As a modification of the first exemplary embodiment, as in the flowchart illustrated in Fig. 10, calculation unit 20 may delete the decomposition target place based on the decomposition result. Specifically, during the decomposition operation in step S15, decomposition information generating unit 50 records the decomposition availability of the decomposition target place as the decomposition result. In step S30, decomposition information generating unit 50 deletes the decomposition target place that cannot be decomposed as a second deletion step. In step S13, decomposition target place specifying unit 23 updates and formally specifies the decomposition target place. The decomposition availability of the decomposition target place can be determined, for example, by determining a difference (change) in the image before and after the decomposition operation by the robot, and determining that the decomposition has succeeded when there is the difference, or by attaching a sensor to the hand of the robot and directly sensing the removal of the decomposition target place after the decomposition operation.

Thereafter, the process proceeds to step S16 and step S17.

As a result, only the decomposition target place that has been reliably decomposed can be accumulated as the decomposition information, and decomposition information generating unit 50 can generate more accurate decomposition information.

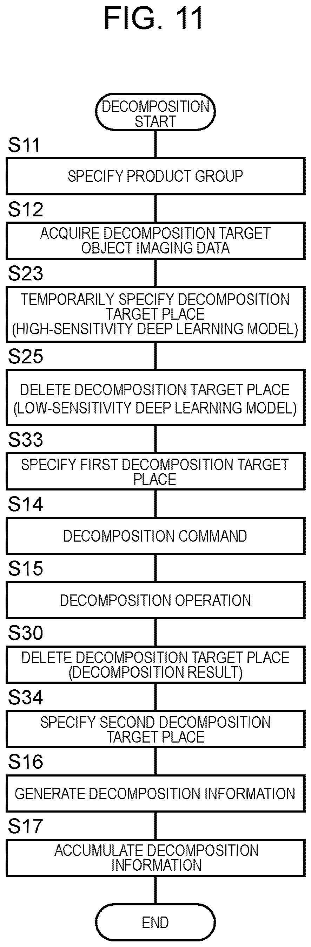

As another modification of the first exemplary embodiment, as in the flowchart shown in Fig. 11, steps S25 and S30, which are the two types of decomposition target place deletion steps, can also be combined. In this case, similarly to Fig. 9, decomposition target place specifying unit 23 specifies the information in which the decomposition target place is deleted in step S25 as a first decomposition target place in step S33.

Thereafter, after passing through steps S14 and S15, decomposition target place specifying unit 23 specifies the information in which the decomposition target place is deleted in step S30 as the second decomposition target place in step S34 as in Fig. 10.

As a result, even when the target places to be subjected to the decomposition operation in step S15 are narrowed down in the first decomposition target place specification in step S33, and then it is erroneously determined that the places other than the decomposition target places are the decomposition target places in the first decomposition target place specification in step S33, it is possible to correct or update based on the decomposition result in the second decomposition target place specification in step S34, and more accurate decomposition information can be generated by decomposition information generating unit 50 after the second decomposition target place is specified.

### (Second exemplary embodiment)

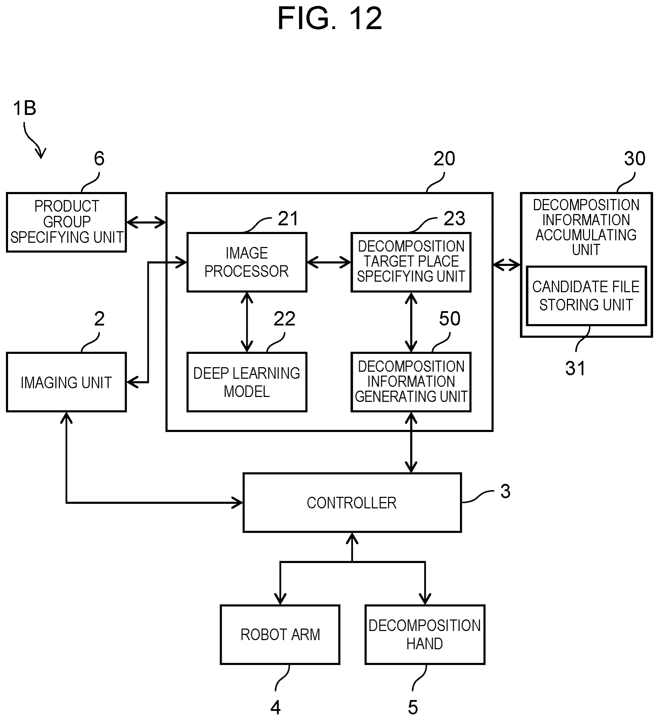

Fig. 12 is a block diagram illustrating automatic decomposition device 1B according to the second exemplary embodiment of the present disclosure. Since it is different from Fig. 4 showing the first exemplary embodiment in that candidate file storing unit 31 is provided in decomposition information accumulating unit 30, and other parts are similar to those in Fig. 4, and thus detailed description is omitted.

In the first exemplary embodiment, the decomposition information is accumulated based on the imaging data of one time, but since the target object is a used product, the deformation is large, and it is also assumed that the coordinates of the decomposition target place generated as the decomposition information are deviated. Therefore, a plurality of pieces of decomposition information are accumulated in candidate file storage unit 31 as a candidate file, and when the number of pieces of decomposition information accumulated in candidate file storing unit 31 satisfies the threshold number, the plurality of candidate files accumulated in the candidate file storing unit 31 are integrated by decomposition information generating unit 50 and the generated decomposition information is used for automatic decomposition at the time of next processing target.

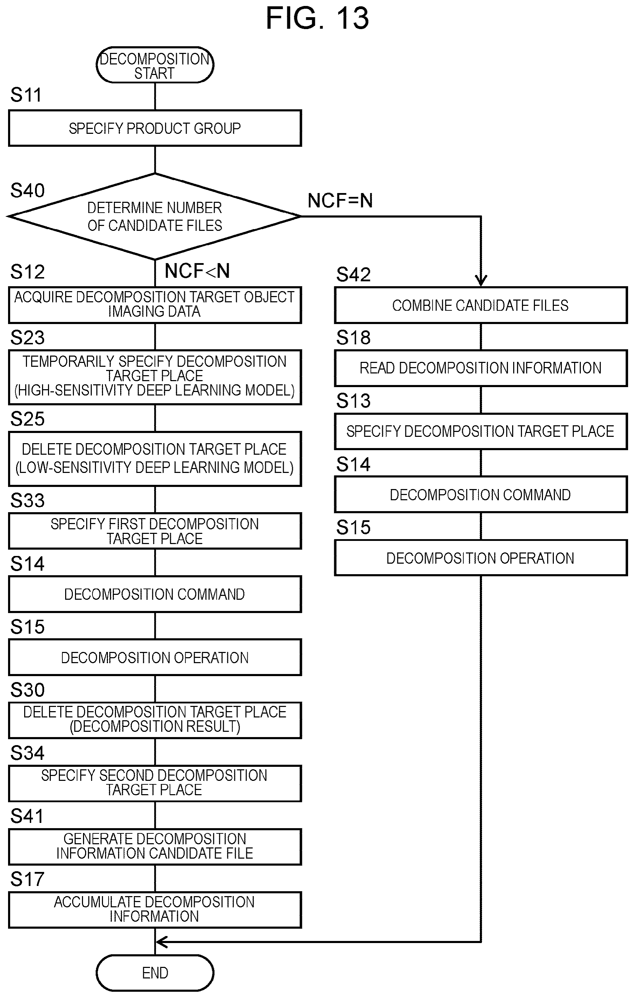

Fig. 13 illustrates a flowchart of the decomposition information generating method in the second exemplary embodiment.

First, in step S11, a product group is specified.

Next, in step S40, the number of decomposition information candidate files NCF of the product group is compared with file integration threshold N, and in a case where NCF<N is satisfied, the decomposition information is generated based on the imaging data in steps S12, S23, S25, S33, S14, S15, S30, and S34 as in the first exemplary embodiment. At that time, in the first exemplary embodiment, decomposition information generating unit 50 generates the decomposition information in step S16. However, in the second exemplary embodiment, decomposition information generating unit 50 generates a decomposition information candidate file in step S41 after step S34 and stores the file in candidate file storing unit 31. Here, in the flowchart of Fig. 13, step S40 and subsequent steps are described based on the flowchart of Fig. 11, but any one of Figs. 9 and 10 may be used.

On the other hand, in a case where NCF=N is satisfied in step S40, decomposition information generating unit 50 generates the decomposition information by integrating the N candidate files in step S42, and reads the decomposition information generated in step S18 to lead to the subsequent decomposition operation.

Here, at the time of integration in step S42, decomposition information generating unit 50 takes an average value of the decomposition target places. As a result, the variation in the coordinates of the decomposition target place of each candidate file is reduced. However, the integration method is not limited to the average value, and may be any method such as taking a median value.

In addition, here, N candidate files are integrated after a plurality of (N) products of the same product group are decomposed, but the candidate files may be integrated every time one product of the same product group is decomposed and updated each time. N is an integer of 2 or more.

Here, when the file integration threshold N of the candidate file is set to 2 or more and 15 or less, it is possible to reduce the variation for each individual, and it is not necessary to store an excessive number of candidate files.

Further, decomposition information generating unit 50 may integrate the decomposition target place specified at the time of integration and the decomposition target place in the existing decomposition information candidate file having the closest position coordinates as the same decomposition target place. At this time, decomposition information generating unit 50 may set, as the same decomposition target place, a plurality of decomposition target places having the closest position coordinates and at positions on the inner side of the sphere within a radius of twice the width dimension of the head of the decomposition target member such as the screw, for example, a radius of 20 mm. As a result, the same decomposition target place having different position coordinates in the plurality of candidate files is regarded as the same, and is not confused with another decomposition target place in the vicinity, which is better.

By the decomposition information generating method according to the first and second exemplary embodiments, it is possible to generate decomposition information in which a recognition error due to deformation or contamination peculiar to a used product to be decomposed is reduced.

That is, according to the decomposition information generating method of the first and second exemplary embodiments, it is not necessary for a manufacturer who makes a product to give decomposition information to the product in advance, and it is possible to generate highly accurate decomposition information based on a recognition result or a decomposition result using deep learning, and for example, it is possible to generate information of a decomposition target place that may not be specified by recognition based on imaging information as the decomposition information. As a result, for example, in a recycling factory that processes used products of various manufacturers, information on a decomposition target place that is difficult to specify can be generated in the recycling factory without the manufacturer giving decomposition information to the product in advance.

In the first and second exemplary embodiments, each component that implements each processing or each function may be configured by dedicated hardware, or a component that can be implemented by software may be implemented by executing a program. For example, each component can be implemented by a program execution unit such as a CPU of a computer reading and executing a software program recorded in a recording medium such as a hard disk or a semiconductor memory.

At this time, a single computer or a plurality of computers may execute the program. That is, each processing or each function may be implemented by being centrally processed by a single device or a single system, or may be implemented by being distributedly processed by a plurality of devices or a plurality of systems.

Note that by appropriately combining arbitrary embodiments or modifications among the various embodiments or modifications described above, the effects of the respective embodiments or modifications can be achieved. In addition, combinations of embodiments, combinations of examples, or combinations of embodiments and examples are possible, and combinations of features in different embodiments or examples are also possible.

As described above, according to the decomposition information generating method of one aspect of the present disclosure, it is not necessary for a manufacturer who makes a product to give decomposition information to the product in advance, and it is possible to generate highly accurate decomposition information based on a recognition result or a decomposition result using deep learning, and for example, it is possible to generate, as the decomposition information, information of a decomposition target place that may not be specified by recognition using imaging information. As a result, for example, in a recycling factory that processes used products of various manufacturers, information on a decomposition target place that is difficult to specify can be generated in the recycling factory without the manufacturer giving decomposition information to the product in advance.

### INDUSTRIAL APPLICABILITY

By using the decomposition information generating method according to the above aspect of the present disclosure, in a recycling factory that processes decomposition target objects of various manufacturers, for example, used products such as home electric appliances such as air conditioners, refrigerators, televisions, and washing machines, information on a decomposition target place that is difficult to specify can be created in the recycling factory without the manufacturer giving decomposition information to the products in advance. As a result, processing of used products by automatic decomposition becomes more precise, and labor saving and further resource utilization of used home electrical appliances can be promoted.

### REFERENCE MARKS IN THE DRAWINGS

- 1, 1A, 1B: automatic decomposition device
- 2: imaging unit
- 3: controller
- 4: robot arm
- 5: decomposition hand
- 10: decomposition target object
- 10a: decomposition target place
- 10b: decomposition non-target place
- 20: calculation unit
- 21: image processor
- 22: deep learning model
- 22a: high-sensitivity deep learning model (first deep learning model)
- 22b: low-sensitivity deep learning model (second deep learning model)
- 23: decomposition target place specifying unit
- 30: decomposition information accumulating unit
- 31: candidate file storing unit
- 50: decomposition information generating unit
- 101: product
- 102: storage device
- 103: product having disassembling information
- 104: disassembling factory
- 105: material

## Claims

1. A decomposition information generating method, comprising:
specifying, based on a first deep leaning model, a plurality of decomposition target places from a captured image obtained by imaging a target object, the first deep learning model being among two deep learning models having learned images of a decomposition target place and a decomposition non-target place of the target object;
updating the plurality of specified decomposition target places by deleting, as the decomposition non-target place, at least one of the plurality of specified decomposition target places by using at least one deletion step among a first deletion step and a second deletion step,
the first deletion step being a step of deleting, as the decomposition non-target place, at least one of the plurality of specified decomposition target places based on a second deep learning model having a lower detection rate of the decomposition target place than the first deep learning model among the two deep learning models, and
the second deletion step being a step of deleting, as the decomposition non-target place, at least one of the plurality of specified decomposition target places based on decomposition availability information acquired by an automatic decomposition device performing a decomposition operation based on the plurality of specified decomposition target places; and
generating decomposition information based on the plurality of updated decomposition target places.

2. The decomposition information generating method according to Claim 1,
wherein
the first deep learning model is a high-sensitivity deep learning model that
learns two classifications of images of the decomposition target place and the decomposition non-target place of the target object in advance,
specifies more decomposition target places than the second deep learning model, and
is likely to erroneously determine the decomposition non-target place as the decomposition target place, and
the second deep learning model is a low-sensitivity deep learning model that
learns two classifications of images of the decomposition target place and the decomposition non-target place of the target object in advance,
makes fewer erroneous determinations than the first deep learning model, and
is likely to detect the fewer decomposition target places.

3. The decomposition information generating method according to Claim 1,
wherein
the generating the decomposition information includes:
storing a plurality of decomposition information candidate files each including the plurality of specified decomposition target places; and
integrating the plurality of the stored decomposition information candidate files to generate the decomposition information when a number of the plurality of decomposition information candidate files stored by the storing reaches a threshold.

4. The decomposition information generating method according to Claim 3, wherein the integrating the decomposition information candidate files includes taking an average value of a plurality of corresponding decomposition target places, each of the plurality of corresponding decomposition target places being included in each of the plurality of decomposition information candidate files.

5. The decomposition information generating method according to Claim 3 or 4, wherein the threshold is 2 or more and 15 or less.

6. The decomposition information generating method according to Claim 3 or 4, wherein the integrating the decomposition information candidate files includes:
specifying a decomposition target member in the target object; and
integrating decomposition target places at a position inside a sphere within a radius twice a width dimension of the decomposition target member among a plurality of decomposition target places included in the plurality of decomposition candidate files.

7. The decomposition information generating method according to Claim 5, wherein the integrating the decomposition information candidate files includes:
specifying a decomposition target member in the target object; and
integrating decomposition target places at a position inside a sphere within a radius twice a width dimension of the decomposition target member among a plurality of decomposition target places included in the plurality of decomposition candidate files.
